# EUROPÄISCHE PATENTSCHRIFT

(11) **EP 2 242 663 B1**
(45) Veröffentlichungstag und Bekanntmachung des Hinweises auf die Patenterteilung: **12.09.2012**
(21) Anmeldenummer: 09712075.2
(22) Anmeldetag: 29.01.2009
(51) Int. Cl.: B60K 15/03

(54) **KRAFTSTOFFBEHÄLTER FÜR KRAFTFAHRZEUGE AUS THERMOPLASTISCHEM KUNSTSTOFF**
FUEL TANK FOR MOTOR VEHICLES MADE OF THERMOPLASTIC PLASTIC
RÉSERVOIR DE CARBURANT EN MATIÈRE THERMOPLASTIQUE POUR DES VÉHICULES AUTOMOBILES

(30) Priorität: 18.02.2008 DE 102008009829
(43) Veröffentlichungstag der Anmeldung: 27.10.2010
(73) Patentinhaber: Kautex Textron GmbH & Co. KG, 53229 Bonn (DE)
(72) Erfinder: GEBERT, Klaus, 47877 Willich (DE); KARSCH, Ulrich, 53859 Niederkassel (DE)
(74) Vertreter: Polypatent
(86) Internationale Anmeldenummer: PCT/EP2009/000570
(87) Internationale Veröffentlichungsnummer: WO 2009/103404

(56) Entgegenhaltungen:
- EP-A- 1 493 961
- WO-A-00/47437
- DE-A1- 2 931 947
- DE-A1-102006 031 902
- FR-A- 2 481 773

## Beschreibung

Die Erfindung betrifft einen Kraftstoffbehälter für Kraftfahrzeuge, aus thermoplastischem Kunststoff, mit wenigstens einem Versteifungselement innerhalb des Kraftstoffbehälters, wobei sich das Versteifungselement so zwischen zwei gegenüberliegenden Behälterwandungen erstreckt, dass es einer durch Innendruck des Kraftstoffbehälters bedingten Deformation entgegenwirkt.

Die heutzutage in Kraftfahrzeugen verwendeten Kraftstoffbehälter bestehen überwiegend aus thermoplastischem Kunststoff und werden nach dem Extrusionsblasformverfahren hergestellt. Die für den Betrieb benötigten Ein- und Anbauten, wie beispielsweise Schwalleinbauten, Lüftungsventile und -leitungen, Kraftstoffpumpe, Geber, Schlingertöpfe und dergleichen, können während der Herstellung des Kraftstoffbehälters umblasen werden oder nachträglich in den fertigen Behälter eingesetzt werden. Aus dem Stand der Technik ist es beispielsweise bekannt, eine Fördereinheit, umfassend einen Schwalltopf und eine Kraftstoffpumpe, als sogenannte "drop-in"-Lösung über eine Öffnung in der Kraftstoffbehälteroberseite in den Kraftstoffbehälter einzubringen. Vorteilhafterweise ist die Fördereinheit an dem in Einbaulage des Kraftstoffbehälters unteren Boden des Kraftstoffbehälters angeordnet. Dazu wird die Fördereinheit in der Regel federnd gegen den Boden des Kraftstoffbehälters gedrückt. Nachteilig daran ist, dass sich die Federkräfte mit dem Tankinnendruck addieren können und gemeinsam auf die Behälterwandungen wirken.

Ein Kraftstoffbehälter wird üblicherweise drucklos betrieben. Die Druckverhältnisse in dem Kraftstoffbehälter können sich beispielsweise durch Befüllung und Entleerung, Temperaturschwankungen, Bewegungen des Kraftstoffs im Kraftstoffbehälter und dergleichen, ändern. Um die Drucklosigkeit in dem Kraftstoffbehälter zu gewährleisten, werden die Druckänderungen über Entlüftungsventile und - leitungen ausgeglichen.

Das abgeleitete Gasgemisch wird von einem Aktivkohlefilter gereinigt und anschließend an die Umgebung abgegeben. Das Aktivkohlefilter hat nur eine begrenzte Kapazität und muss in regelmäßigen Abständen rückgespült werden, was durch ein Ansaugen von Luft für den Verbrennungsmotor des Kraftfahrzeugs realisiert wird.

Bei Hybridfahrzeugen ist die Möglichkeit, das Aktivkohlefilter zu spülen, begrenzt, da der Verbrennungsmotor nur in bestimmten Fahrsituationen zugeschaltet wird. Dies bedeutet, dass bei Hybridfahrzeugen Betriebssituationen vorherrschen können, in denen es vorteilhaft ist, wenn der Kraftstoffbehälter "verschlossen" wird. Im "verschlossenen" Zustand kann kein Gasgemisch an das Aktivkohlefilter abgeleitet werden. Nachteilig daran ist, dass der Tankinnendruck steigen kann, was zu einer unzulässig starken Verformung des Kraftstoffbehälters führen könnte.

Das Problem der Druckfestigkeit von Kraftstoffbehältern ist aus dem Stand der Technik bekannt. So offenbart die DE 10 2006 031 902 A1 ein Verfahren zur Herstellung von Hohlkörpern aus thermoplastischem Kunststoff, insbesondere ein Verfahren zur Herstellung von Kraftstoffbehältern aus Kunststoff, bei welchem bahn- oder bänderförmige Vorformlinge aus plastifiziertem Kunststoff in einem mehrteiligen, ein Formnest bildenden Werkzeug an der Innenkontur des Formnestes umgeformt werden. Zunächst erfolgt die Ausbildung zweier zueinander komplementärer Zwischenerzeugnisse in Form von Schalen. Anschließend werden an den in Einbaulage jeweils zueinander zugekehrten Innenseiten der Schalen Einbauteile befestigt, wobei wenigstens einige Einbauteile zueinander komplementärer Schalen jeweils komplementär zueinander ausgebildet sind, in dem Sinne, dass sie zu einem zusammengesetzten Bauteil oder zu einer Funktionseinheit verbindbar sind. Die Schalen werden so zusammengefügt, dass die zueinander komplementären Einbauteile ineinander greifen und/oder in Wirkverbindung miteinander gelangen. Um Verformungen des Kraftstoffbehälters aufgrund von einem erhöhten Tankinnendruck entgegenzuwirken, wird vorgeschlagen, dass die Einbauten als Verstrebungen ausgebildet sind.

Die DE102006031902A1 offenbart somit einen Kraftstoffbehälter für ein Kraftfahrzeug, mit wenigstens einem Versteifungselement innerhalb des Kraftstoffbehälters, wobei sich das Versteifungselement so zwischen zwei gegenüberliegenden Behälterwandungen erstreckt, dass es einer durch Innendruck des Kraftstoffbehälters bedingten Deformation entgegenwirkt, wobei das Versteifungselement aus zwei Teilen besteht, und wobei der Kraftstoffbehälter aus thermoplastischem Kunststoff besteht und die Teile des Versteifungselements mittels einer Steck-, Schnapp- oder Rastverbindung verbindbar sind.

Nach der DE 31 31 040 A1 besteht ein druckfester Kraftstofftank zum Einbau in den bei normalen Kraftfahrzeugen für das Reserverad vorgesehenen Raum aus zwei gewölbten Schalen, die an ihren Innenkanten miteinander verschweißt und durch ein koaxiales, als Zuganker wirkendes Rohr miteinander verbunden sind. Das Rohr weist Durchbrechungen auf, so dass sein Innenraum einen Teil des nutzbaren Tankvolumens bildet und gleichzeitig die maximale Füllhöhe in dem Tank begrenzt. Mit seinem unteren Ende ist das Rohr, das aus zwei miteinander verschraubten Abschnitten bestehen kann, an der Innenwand der unteren Schale angeschweißt, während es an seinem oberen Ende an eine in der oberen Schale vorgesehene zentrische Bohrung eingeschweißt ist.

Die DE 711 117 offenbart einen tragbaren Druckbehälter, insbesondere für mittlere Drücke, der eine flache Quaderform hat und dessen im Wesentlichen ebene Seitenwände durch ein Ausbauchen derselben verhindernde Zuganker miteinander verbunden sind, wobei die zum Füllen und Entleeren sowie zu sonstigen Zwecken dienenden Armaturen im Inneren eines den Behälter durchsetzenden Rohres, das zweckmäßig gleichfalls als Zuganker dient, untergebracht sind.

In der EP 1 493 961 B1 wird ein Druckgastank für Kraftfahrzeuge beschrieben. Bei dem metallenen Gasbehälter weisen einander gegenüberüegende Behälterwände eine ihre Steifigkeit erhöhende Profilierung auf und sind zusätzlich durch wenigstens ein Zugelement verbunden. Die Enden des Zugelements werden durch Wärme und Krafteinwirkung so verformt, dass die Behälterwand in einer ausgeformten Ringnut gehalten wird. Anschließend werden die Enden des Zugelements mit der Oberschale und der Unterschale dicht verschweißt. Bei dem aus dem Stand der Technik bekannten Kraftstoffbehälter aus thermoplastischem Kunststoff sind die Versteifungselemente zwischen gegenüberliegenden Behälterwandungen des Kraftstoffbehälters eingeschweißt.

Bei einem Druckanstieg werden die auftretenden Kräfte über die Verbindung zwischen Versteifungselement und Behälterwandung übertragen. Diese Kraftübertragung kann zu einem Kriechen des Kunststoffs im Bereich der Verbindung führen, wodurch sich die Druckfestigkeit des Kunststoffbehälters verringern kann. Dies ist insbesondere bei auf Zug belasteten Verbindungen der Fall. Wenn beispielsweise Versteifungselemente in Form von Zugstäben, die sich über die lichte Höhe des Behälters erstrecken, mit der Behälterwandung verschweißt oder vernietet sind, wird der zur Übertragung von Zugkräften zur Verfügung stehende Querschnitt durch die Anzahl und Anordnung der Schweiß- oder Nietverbindungen bestimmt, nicht hingegen durch den Querschnitt des Versteifungselements selbst. Bei einer solchen Konstruktion ist naturgemäß der in Summe zur Übertragung von Zugkräften verfügbare Querschnitt verhältnismäßig begrenzt. Dem kann dadurch entgegengewirkt werden, dass eine Vielzahl von Versteifungselementen im Behälterinneren vorgesehen wird, was allerdings zu Lasten des Behältervolumens geht.

Aus der EP 1 493 961 A2 ist ein metallener Druckgastank für Kraftfahrzeuge bekannt, dessen gegenüberliegende Behälterwände eine ihre Statikkeit erhöhende Profilierung aufweisen. Darüber hinaus sind die Behälterwände durch wenigstens ein den Gasbehälter durchsetzendes Zugelement miteinander verbunden. Die Zugelemente sind jeweils endseitig zu einem Ankerkopf mit einem umlaufenden Radialkragen geschmiedet. Die Behälterwand der Oberschale und der Unterschale des Gasbehälters wird form- und kraftschlüssig in einer zwischen einem Anschlag und dem Radialkragen gebildeten Ringnut gehalten. Die Ankerköpfe sind jeweils mit der Unterschale und der Oberschale verschweißt.

Andere Gasbehältnisse sind beispielsweise aus der FR 2 481 773 A und aus der DE 29 31 947 A bekannt.

Ein Kraftstoffbehälter ist auch aus der WO 00147437 A bekannt. Dieser umfasst ein säulenförmiges Versteifungselement, welches federnd vorgespannt gegenüberliegende Wandbereiche der Behälterwandung gegeneinander abstützt. Das Versteifungselement ist derart nachgiebig ausgestaltet, das es Volumenveränderungen des Behälters in der Größenordnung von mehr als einem Liter begrenzt.

Der Erfindung liegt die Aufgabe zugrunde, einen Kraftstoffbehälter für Kraftfahrzeuge der eingangs genannten Art bereitzustellen, der eine hohe Druckfestigkeit aufweist und bei welchem ein Versteifungselement so vorgesehen ist, dass der Kriechneigung des Kunststoffs bei im Behälter vorherrschendem Überdruck entgegengewirkt wird. Insbesondere soll das Versteifungselement einfacher innerhalb des Kraftstoffbehälters angeordnet werden können.

Die Aufgabe wird gelöst mit dem Merkmal des Anspruchs 1. Vorteilhafte Ausgestaitungen ergeben sich aus den Unteransprüchen.

Unter Innendruck im Sinne der Erfindung ist ein Druck in der Größenordnung von mindestens 400 mbar über Atmosphärendruck zu verstehen. Beispielsweise bei einer Temperatur von ca. 40°C entsteht in einem hermetisch abgeschlossenen Kraftstoffbehälter ein Überdruck von etwa 400 mbar gegenüber dem Atmosphärendruck. Bei niedrigen Temperaturen kann hingegen ein Unterdruck von mehr als 150 mbar entstehen. Das Versteifungselement gemäß der Erfindung dient selbstverständlich auch zur Stabilisierung des Kraftstoffbehälters gegen etwa einen temperaturbedingten Druckanstieg von außen (Unterdruck gegenüber Atmosphärendruck im inneren des Behälters).

Das aus dem Stand der Technik bekannte Kriechen des Kunststoffs im Bereich der Verbindung zwischen dem Versteifungselement und der Behälterwandung, welches sich nachteilig auf die Druckfestigkeit des Kraftstoffbehälters auswirkt, wird dadurch verhindert, dass erfindungsgemäß zwei Enden des Versteifungselements die Behälterwandung von außen hintergreifen. Dies hat den Vorteil, dass die Verbindung zwischen Versteifungselement und Behälterwandung lediglich auf Druck belastet wird, wodurch der Kriechneigung des Kunststoffs im Bereich der Verbindung zwischen Versteifungselement und Behälterwandung entgegengewirkt wird.

Besonders zweckmäßig ist es, wenn das Versteifungselement zwei zueinander fluchtende Öffnungen in mit Abstand zueinander gegenüberliegenden Bereichen der Behälterwandung durchsetzt.

In einer besonders vorteilhaften Ausführungsform stützt sich das Verbindungselement beidseitig mit einem flanschartigen Befestigungsrand oder Befestigungszungen gegen die Behälteraußenwandung ab. Dies hat den Vorteil, dass die Auflagefläche, die der Kraftübertragung dient größer ist, wodurch sich die Flächenpressung verringert.

Zweckmäßigerweise ist wenigstens ein Ende des Versteifungselements gas- und flüssigkeitsdicht mit der Behälteraußenwandung verschweißt.

Auch kann wenigstens ein Ende des Versteifungselements gegen die Behälteraußenwandung verspannt sein, wobei vorzugsweise zwischen der Behälterwandung und dem Versteifungselement Mittel zur Abdichtung angeordnet sind, so dass die Verbindung zwischen Versteifungselement und Behälteraußenwandung gas- und flüssigkeitsdicht ist. Ein Vorteil an einer solchen Verbindung ist, dass die Verbindung zwischen Versteifungselement und Behälteraußenwandung im Bedarfsfall gelöst werden kann.

Ebenfalls kann wenigstens ein Ende des Versteifungselements durch eine Dreh-Rast-Verbindung mit der Behälteraußenwandung verbunden sein, wobei die Dreh-Rast-Verbindung vorzugsweise Mittel zur Abdichtung umfasst, so dass die Verbindung zwischen Versteifungselement und Behälteraußenwandung gas- und flüssigkeitsdicht ist. Vorteil einer solchen Dreh-Rast-Verbindung zwischen Versteifungselement und Behälteraußenwandung ist, dass die Verbindung jederzeit einfach gelöst und wieder verschlossen werden kann. Beispielsweise kann solch eine Dreh-Rast-Verbindung als Bajonettverschluss ausgebildet sein.

Vorzugsweise ist das Versteifungselement so unter Vorspannung gegen die Behälteraußenwandung abgestützt, dass die Vorspannung einer Deformation des Kraftstoffbehälters durch einen Druckanstieg innerhalb des Kraftstoffbehälters entgegenwirkt.

Das Versteifungselement besteht in vorteilhafter Art und Weise aus wenigstens zwei Teilen. Die Teile des Versteifungselements können komplementär zueinander ausgebildet sein, in dem Sinne, dass sie zu einem zusammengesetzten Versteifungselement verbindbar sind. Ein Vorteil der Mehrteiligkeit des Versteifungselements ist, dass das Versteifungselement einfacher innerhalb des Kraftstoffbehälters angeordnet werden kann.

Die Teile des Versteifungselements sind erfindungsgemäß mittels einer Schraub-, Bajonett-, Steck-, Schnapp- oder Rastverbindung miteinander verbunden. Die Schraub- oder die Bajonettverbindung bietet den Vorteil, dass die Teile des Versteifungselements ohne größeren Aufwand voneinander getrennt werden können und dass die Verbindung zwischen den einzelnen Teilen des Versteifungselements eine ausreichende Belastbarkeit aufweisen. Eine Steckverbindung weist die Vorteile auf, dass die Verbindung einfach herzustellen ist und wieder lösbar ist. Eine Schnapp- oder Rastverbindung hat den Vorteil, dass die Verbindung einfach herzustellen ist und eine ausreichende Belastbarkeit aufweist.

Bei einer bevorzugten Ausführungsform der Erfindung ist das Versteifungselement als Fördereinheit ausgebildet, wobei die Fördereinheit zwischen gegenüberliegenden fluchtenden Wartungsöffnungen in der Behälterwandung angeordnet ist. Vorteilhaft daran ist, dass ein Einbauteil weniger in den Kraftstoffbehälter eingebracht werden muss, da die Fördereinheit gleichzeitig als Versteifungselement dient.

Die Fördereinheit umfasst in der Regel einen Schwalltopf und eine darin angeordnete Kraftstoffpumpe. Ist das Versteifungselement mehrteilig ausgebildet, so kann beispielsweise der in Einbaulage untere Teil des Versteifungselements als Schwalltopf ausgebildet sein.

Zweckmäßiger Weise ist der Kraftstoffbehälter einstückig als extrusionsblasgeformter Behälter ausgebildet.

Die Erfindung wird nachstehend beispielsweise anhand eines in den Zeichnungen dargestellten Ausführungsbeispiels erläutert.

Es zeigen:
- Figur 1:: einen Schnitt durch einen erfindungsgemäßen Kraftstoffbehälter, wobei das Versteifungselement als Fördereinheit ausgebildet ist,

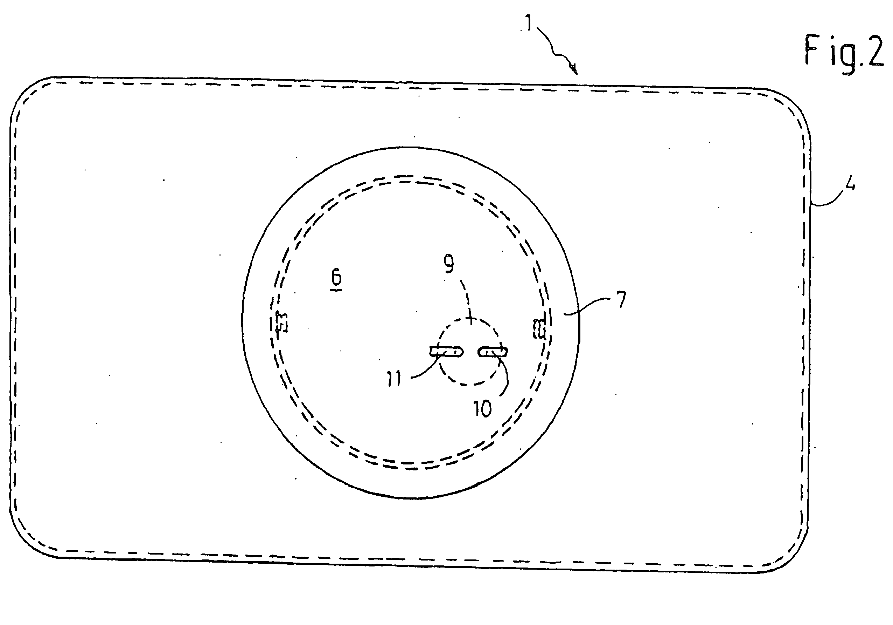

- Figur 2:: eine Draufsicht auf den Kraftstoffbehälter aus Figur 1 und
- Figuren 3 bis 5: verschiedene Varianten der Verbindung der Teile des Versteifungselementes miteinander.

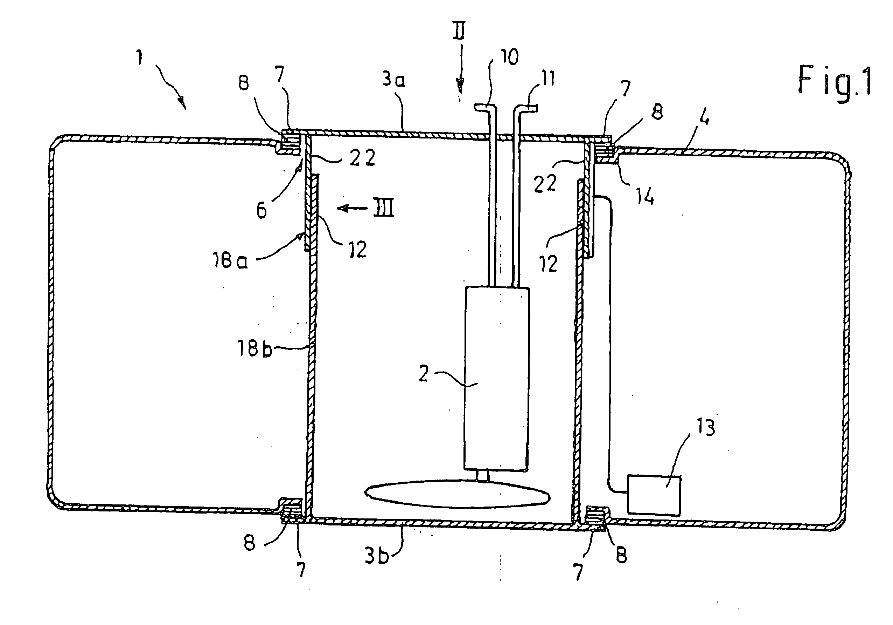

Ein Kraftstoffbehälter 1 gemäß der Erfindung ist in Figur 1 dargestellt. Der Kraftstoffbehälter 1 ist in bekannter Art und Weise als Behälter aus thermoplastischem Kunststoff ausgebildet. Dieser kann beispielsweise einstückig durch Extrusionsblasformen hergestellt worden sein. Figur 1 zeigt eine stark vereinfachte Schnittansicht des Kraftstoffbehälters 1 gemäß der Erfindung. Ein Einfüllrohr sowie Mittel zur Be- und Entlüftung des Kraftstoffbehälters 1 sind aus Vereinfachungsgründen nicht dargestellt.

Die Behälterwandung 4 des Kraftstoffbehälters 1 ist mit einer in Einbaulage oberen Öffnung 6 und einer in Einbaulage unteren Öffnung 5 versehen. Beide Öffnungen 5, 6, sind in einander gegenüberliegenden Abschnitten der Behälterwandung zueinander fluchtend angeordnet und besitzen einen im Wesentlichen gleichen Durchmesser. Die Öffnungen 5, 6 sind darüber hinaus als kreisrunde Ausschnitte der Behälterwandung 4 vorgesehen. In die Öffnungen 5, 6 ist eine sich über die gesamte Höhe des Kraftstoffbehälters erstreckende Fördereinheit 2 eingesetzt, die in bekannter Art und Weise eine Kraftstoffpumpe 9 beherbergt. Die Fördereinheit 2 definiert ein von dem Hauptvolumen des Kraftstoffbehälters 1 getrenntes Kraftstoffreservoir, aus dem die Kraftstoffpumpe 9 über eine Kraftstoffversorgungsleitung 10 Treibstoff zu dem Motor einer Brennkraftmaschine fördert.

Erfindungsgemäß ist vorgesehen, dass die Fördereinheit 2 zweiteilig ausgebildet ist, wobei diese aus zwei mechanisch zusammenwirkenden, topfförmigen Einsätzen 3a, 3b gebildet ist, die sich jeweils außenseitig auf gegenüberliegenden Bereichen der Behälterwandung 4 abstützen und die Öffnungen 5 und 6 durchsetzen.

Der in Einbaulage in Figur 1 dargestellte untere Einsatz 3b bildet den Schwallbehälter für die Kraftstoffpumpe 9, wohingegen der in Einbaulage obere Einsatz 3a einen Deckelverschluss der Fördereinheit 2 bildet, welcher in bekannter Art und Weise mit Durchführungen für eine Kraftstoffversorgungsleitung 10 sowie für elektrische Leitungen 11 versehen ist. Beide die Fördereinheit 2 bildenden Einsätze, 3a, 3b sind in den dargestellten Ausführungsbeispielen als zylinderförmige bzw. topfförmige Elemente ausgebildet, es ist für den Fachmann selbstverständlich, dass die Einsätze jeweils beliebige, zueinander komplementäre Querschnittkonturen aufweisen können.

Die Einsätze 3a, 3b sind in den dargestellten Ausführungsbeispielen jeweils mit einer geschlossenen Außenkontur ausgebildet und stützen sich mit einem umlaufenden, flanschartig ausgebildeten Kragen 7 jeweils unter Zwischenlage einer Dichtung 8 außenseitig gegen die Behälterwandung 4 ab.

Wie nachstehend noch beschrieben wird sind die Einsätze 3a, 3b im Bereich ihrer gegenseitigen Durchdringung formschlüssig miteinander verbunden.

Obwohl die Fördereinheit 1 in dem beschriebenen Ausführungsbeispiel mit einer überwiegend geschlossenen Außenkontur ausgebildet ist, ist für den Fachmann klar, dass nur ein Teil der durch die Einsätze 3a, 3b definierten Kontur als geschlossene Außenkontur ausgebildet sein muss.

Bei dem beschriebenen Ausführungsbeispiel definiert der in Einbaulage untere Einsatz 3b den sogenannten Schwallbehälter der Fördereinheit 2, der ein gegenüber dem übrigen Volumen des Kraftstoffbehälters 1 abgeschlossenes Reservoir bildet, welches bei verschiedenen Fahrzuständen des KFZ durch die Fahrdynamik hervorgerufene Schwallbewegungen minimiert und zugleich sicherstellt, dass die Kraftstoffpumpe 7 in jedem Fahrzustand vollständig in Kraftstoff getaucht ist. Darüber hinaus definiert dieses Reservoir das Reservebetankungsvolumen des Kraftfahrzeuges.

Das durch die Einsätze 3a, 3b gebildete Kraftstoffreservoir kommuniziert mit dem übrigen Volumen des Kraftstoffbehälters 1, entweder durch nicht dargestellte Leitungen oder durch in entsprechender Höhe der Einsätze vorgesehene Durchbrüche. Dies ist aus Vereinfachungsgründen in den Zeichnungen nicht dargestellt.

Häufig umfassen Kraftstoffbehälter mehrere, miteinander kommunizierende Teilvolumina mit konstruktionsbedingt verschiedenen Füllstandsniveaus. Hierzu ist in dem Kraftstoffbehälter wenigstens eine weitere Pumpe, beispielsweise in Form einer Saugstrahlpumpe vorgesehen, die beispielsweise über einen Kraftstoffrücklauf von der Brennkraftmaschine angetrieben, Kraftstoff aus dem Hauptvolumen des Kraftstoffbehälters 1 in das durch die Einsätze 3a, 3b gebildete Reservoir fördert.

Mit 13 ist ein an der Fördereinheit 2 angeordneter Füllstandsgeber für das Hauptvolumen des Kraftstoffbehälters 1 bezeichnet. Der Füllstandsgeber 13 ist in bekannter Art und Weise über nicht dargestellte elektrische Leitungen an die Steuerelektronik des KFZ angeschlossen.

Die Fördereinheit 2 gemäß der Erfindung ist in vorteilhafter Art und Weise so ausgebildet, dass diese bei einem sich etwa in dem Kraftstoffbehälter 1 aufbauenden Innendruck auch als Verstärkungs- bzw. Versteifungselement des Kraftstoffbehälters 1 wirkt. Wie vorstehend bereits erwähnt, sind zu diesem Zwecke die Einsätze 3a, 3b in den Kraftstoffbehälter 1 in ihrem Durchdringungsbereich 12 mechanisch so miteinander verbunden, dass diese sich jeweils mit ihrem als Befestigungsflansch wirkenden Kragen 7 gegen die Außenseite der Behälterwandung 4 abstützen und so einer druckbedingten Deformation entgegenwirken. Der Kragen 7 der Einsätze stützt sich jeweils mit einer hinreichend großen Auflagefläche gegen die Behälterwandung ab, so dass durch Innendruck des Kraftstoffbehälters bedingte Zugkräfte auf die Fördereinheit 2 zuverlässig in die Behälterwandung so eingeleitet werden, dass eine plastische Verformung des Kunststoffes vermieden wird.

Die Erfindung ist so zu verstehen, dass anstelle eines umlaufenden Kragens 7 jeweils einzelne, sich von außen gegen die Behälterwandung 4 abstützende Befestigungszungen vorgesehen sein können.

Wie bereits erwähnt, ist der in Einbaulage obere Einsatz 3a, insbesondere in seinem Durchdringungsbereich 12 mit dem unteren Einsatz 3b mit einer umlaufend geschlossenen Kontur ausgebildet, alternativ hierzu kann der Einsatz 3a beispielsweise als einer die obere Öffnung 6 in der Behälterwandung 4 verschließende Deckelplatte mit in das Behälterinnere hereinragenden Befestigungszungen oder Befestigungsstegen ausgebildet sein.

Bei der in Figur 1 dargestellten Variante eines Kraftstoffbehälters 1 gemäß der Erfindung sind die, jeweils die Öffnungen 5, 6 in der Behälterwandung 4 nach außen vollständig abschließenden Einsätze gegen die Behälterwandung 4 lediglich geklemmt, wobei die hierzu erforderliche Zugkraft über die mechanische Verbindung der Einsätze 3a, 3b aufgebracht wird, wie nachstehend noch beschrieben wird. Die Abdichtung wird, wie bereits erwähnt, über die Dichtungen 8 bewerkstelligt, wobei diese jeweils in umlaufende Absätze 14 der Behälterwandung 4 eingelegt sind. Die Klemmung kann alternativ durch einen separaten Flanschring bewerkstelligt werden, wenn in der Behälterwandung des Kraftstoffbehälters ebenfalls ein entsprechend ausgebildeter Befestigungsflansch vorgesehen ist, der dann von dem Flanschring untergriffen würde.

Alternativ hierzu können die Kragen 7 der Einsätze 3a, 3b mit der Behälterwandung 4 verschweißt sein. In diesem Falle ist eine Entnahme der Einsätze 3a, 3b aus dem Kraftstoffbehälter 1 zu Revisionszwecken nicht mehr möglich. Dann ist zweckmäßigerweise in dem Einsatz 3a eine verschließbare Revisionsöffnung vorgesehen, durch die beispielsweise die Kraftstoffversorgungsleitung 10 und die elektrischen Leitungen 11 hindurchgeführt sind.

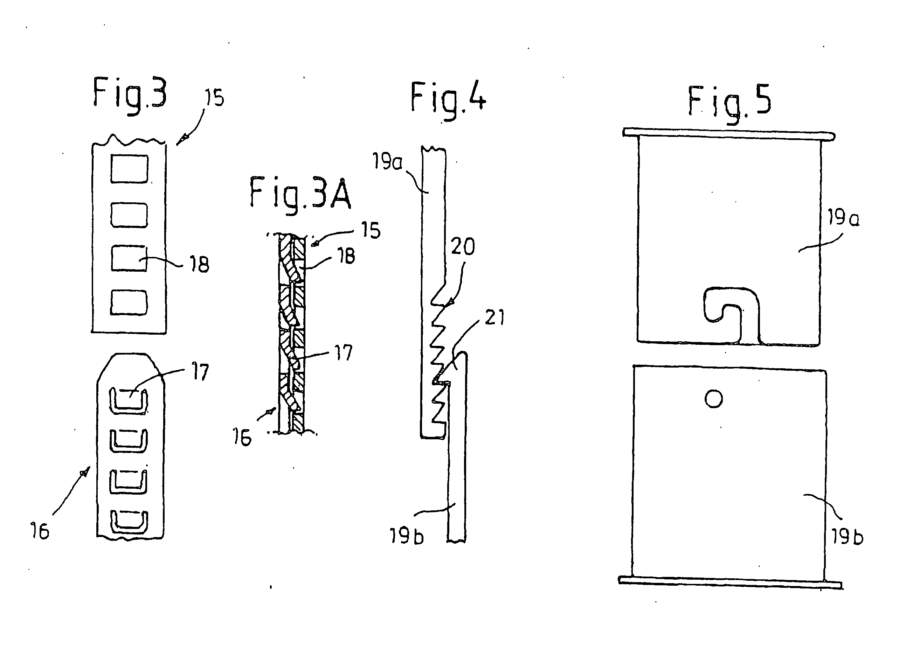

Wie dies in den Figuren 3 bis 5 andeutungsweise dargestellt ist, können die Einsätze 3a, 3b in ihrem Durchdringungsbereich 12 auf verschiedene Art und Weise miteinander verrastet worden sein, alternativ können diese auch über eine Dreh-Rast-Verbindung (Bajonettverschluss), Schraubverbindung oder eine Renkverbindung miteinander verbunden worden sein.

Figur 3 zeigt eine schematische Ansicht einer Rastverbindung, umfassend eine Rastaufnahme 15 und eine hierzu passende Rastzunge 16. Beispielsweise können an einem zylindrischen Abschnitt 19a des Einsatzes 3a außenseitig mehrere mit Abstand zueinander angeordnete Rastaufnahmen 15 in Form von Rastkanälen vorgesehen sein, in die an dem Einsatz 3b umfänglich befestigte Rastzungen 16 eingreifen. Die Rastzungen 16 können hierzu mit Rastfedern 17 versehen sein, die in entsprechend ausgebildete Rastausnehmungen 18 der Rastaufnahmen 15 einfedern, wie dies in Figur 3a dargestellt ist. Figur 3a zeigt einen Längsschnitt durch die Verrastung.

Figur 4 zeigt eine alternative Variante einer Rastverbindung der Einsätze 3a, 3b. Dabei ist vorgesehen, dass der zylindrische Abschnitt 19a des Einsatzes 3a mit dem zylindrischen Abschnitt 19b des Einsatzes 3b jeweils über den gesamten Umfang verrastet ist, wobei innen umlaufend in dem zylindrischen Abschnitt 19a des Einsatzes 3a Rastzacken 20 vorgesehen sind und am Außenumfang des zylindrischen Abschnitts 19b ein umlaufend ausgebildeter Rasthaken 21 vorgesehen ist. Es ist für den Fachmann klar, dass anstelle von umlaufenden Rastzacken 20 und Rasthaken 21 auch diskret am Umfang der zylindrischen Abschnitte 19a, 19b verteilt angeordnete Rastmittel vorgesehen sein können.

In Figur 5 ist schließlich stark vereinfacht eine Art Bajonettverschluss dargestellt, über welchen die zylindrischen Abschnitte 19a, 19b der Einsätze 3a, 3b formschlüssig miteinander verriegelt werden können.

### Bezugszeichenliste:

- 1: Kraftstoffbehälter
- 2: Fördereinheit
- 3a, 3b: Einsätze
- 4: Behälterwandung
- 5: Untere Öffnung
- 6: Obere Öffnung
- 7: Kragen
- 8: Dichtung
- 9: Kraftstoffpumpe
- 10: Kraftstoffversorgungsleitung
- 11: elektrische Leitungen
- 12: Durchdringungsbereich
- 13: Füllstandsgeber
- 14: Absätze
- 15: Rastaufnahme
- 16: Rastzunge
- 17: Rastfedern
- 18: Rastausnehmung
- 19a, 19b: Zylindrische Abschnitte der Einsätze 3a, 3b
- 20: Rastzacken
- 21: Rasthaken

## Patentansprüche

1. Kraftstoffbehälter (1) für ein Kraftfahrzeug, mit wenigstens einem Versteifungselement innerhalb des Kraftstoffbehälters (1), wobei sich das Versteifungselement so zwischen zwei gegenüberliegenden Behälterwandungen (4) erstreckt, dass es einer durch Innendruck des Kraftstoffbehälters (1) bedingten Deformation entgegenwirkt, wobei zwei Enden des Versteifungselements die Behälterwandung (4) von außen hintergreifen und das Versteifungselement aus wenigstens zwei Teilen besteht,
wobei
der Kraftstoffbehälter aus thermoplastischem Kunststoff besteht und die Teile des Versteifungselements mittels einer Schraub-, Bajonett-, Steck-, Schnapp- oder Rastverbindung verbunden sind.

2. Kraftstoffbehälter nach Anspruch 1,
**dadurch gekennzeichnet, dass**
das Versteifungselement zwei zueinander fluchtende Öffnungen (5, 6) in mit Abstand zueinander gegenüberliegender Bereichen der Behälterwandung (4) durchsetzt.

3. Kraftstoffbehälter nach Anspruch 1 oder 2,
**dadurch gekennzeichnet, dass**
sich das Verbindungselement beidseitig mit einem flanschartigen Kragen (7) oder Befestigungszungen gegen die Behälteraußenwandung (4) abstützt.

4. Kraftstoffbehälter nach einem der Ansprüche 1 bis 3,
**dadurch gekennzeichnet, dass**
wenigstens ein Ende des Versteifungselements gas- und flüssigkeitsdicht mit der Behälteraußenwandung (4) verschweißt ist.

5. Kraftstoffbehälter nach einem der Ansprüche 1 bis 4,
**dadurch gekennzeichnet, dass**
wenigstens ein Ende des Versteifungselements gegen die Behälterwandung (4) verspannt ist, wobei vorzugsweise zwischen der Behälterwandung (4) und dem Versteifungselement Mittel zur Abdichtung (8) angeordnet sind, so dass die Verbindung zwischen Versteifungselement und Behälteraußenwandung (4) gas- und flüssigkeitsdicht ist.

6. Kraftstoffbehälter nach einem der Ansprüche 1 bis 5,
**dadurch gekennzeichnet, dass**
wenigstens ein Ende des Versteifungselements durch eine Dreh-Rast-Verbindung mit der Behälteraußenwandung (4) verbunden ist, wobei die Dreh-Rast-Verbindung vorzugsweise Mittel zur Abdichtung (8) umfasst, so dass die Verbindung zwischen Versteifungselement und Behälteraußenwandung (4) gas- und flüssigkeitsdicht ist.

7. Kraftstoffbehälter nach einem der Ansprüche 1 bis 6,
**dadurch gekennzeichnet, dass**
das Versteifungselement so unter Vorspannung gegen die Behälteraußenwandung (4) abgestützt ist, dass die Vorspannung eine Deformation des Kraftstoffbehälters (1) durch einen Druckanstieg innerhalb des Kraftstoffbehälters (1) entgegenwirkt.

8. Kraftstoffbehälter nach einem der Ansprüche 1 bis 7,
**dadurch gekennzeichnet, dass**
das Versteifungselement als Fördereinheit ausgebildet ist, wobei die Fördereinheit zwischen gegenüberliegenden fluchtenden Öffnungen (5, 6) in der Behälterwandung (4) angeordnet ist.

9. Kraftstoffbehälter nach einem der Ansprüche 1 bis 8,
**dadurch gekennzeichnet, dass**
der Kraftstoffbehälter (1) als extrusionsblasgeformter Behälter ausgebildet ist.

## Claims

1. Fuel tank (1) for a motor vehicle, with at least one stiffening element within the fuel tank (1), the stiffening element extending between two opposite tank walls (4) in such a way that it counteracts a deformation caused by internal pressure of the fuel tank (1), two ends of the stiffening element engaging the tank wall (4) from the rear and from the outside, and the stiffening element consisting of at least two parts,
wherein
the fuel tank consists of thermoplastic synthetic material and the parts of the stiffening element have been connected by means of a screw connection, bayonet connection, plug-in connection, snap-in connection or latching connection.

2. Fuel tank according to Claim 1,
**characterised in that**
the stiffening element passes through two mutually aligned openings (5, 6) in opposite regions of the tank wall (4) spaced from one another.

3. Fuel tank according to Claim 1 or 2,
**characterised in that**
the connecting element is supported on both sides against the tank outer wall (4) by a flange-like collar (7) or fastening latches.

4. Fuel tank according to one of Claims 1 to 3,
**characterised in that**
at least one end of the stiffening element has been welded to the tank outer wall (4) in gas-tight and liquid-tight manner.

5. Fuel tank according to one of Claims 1 to 4,
**characterised in that**
at least one end of the stiffening element has been braced against the tank wall (4), means for sealing (8) preferably having been arranged between the tank wall (4) and the stiffening element so that the connection between stiffening element and tank outer wall (4) is gas-tight and liquid-tight.

6. Fuel tank according to one of Claims 1 to 5,
**characterised in that**
at least one end of the stiffening element has been connected to the tank outer wall (4) by a rotary latching connection, the rotary latching connection preferably including means for sealing (8) so that the connection between stiffening element and tank outer wall (4) is gas-tight and liquid-tight.

7. Fuel tank according to one of Claims 1 to 6,
**characterised in that**
the stiffening element has been supported against the tank outer wall (4) subject to prestressing in such a way that the prestressing counteracts a deformation of the fuel tank (1) by virtue of a rise in pressure within the fuel tank (1).

8. Fuel tank according to one of Claims 1 to 7,
**characterised in that**
the stiffening element takes the form of a conveying unit, the conveying unit having been arranged between opposite aligned openings (5, 6) in the tank wall (4).

9. Fuel tank according to one of Claims 1 to 8,
**characterised in that**
the fuel tank (1) takes the form of an extrusion-blow-moulded tank.

## Revendications

1. Réservoir de carburant (1) pour un véhicule automobile, avec au moins un élément de renforcement à l'intérieur du réservoir de carburant (1), l'élément de renforcement s'étendant entre deux parois de réservoir (4) opposées de manière à s'opposer à une déformation due à la pression intérieure du réservoir de carburant (1), deux extrémités de l'élément de renforcement ayant prise à l'arrière de la paroi de réservoir (4) à l'extérieur et l'élément de renforcement étant constitué d'au moins deux pièces,
ledit réservoir de carburant étant en matière thermoplastique et les pièces de l'élément de renforcement étant raccordées au moyen d'une connexion à vis, à baïonnette, à fiche, à encliquetage ou à enclenchement.

2. Réservoir de carburant selon la revendication 1,
**caractérisé**
**en ce que** l'élément de renforcement traverse deux ouvertures (5, 6) alignées l'une sur l'autre dans des zones opposées et espacées entre elles de la paroi de réservoir (4).

3. Réservoir de carburant selon la revendication 1 ou la revendication 2,
**caractérisé**
**en ce que** l'élément de connexion repose par un col (7) en forme de bride ou par des languettes de fixation de part et d'autre contre la paroi extérieure du réservoir (4).

4. Réservoir de carburant selon l'une des revendications 1 à 3,
**caractérisé**
**en ce qu'**au moins une extrémité de l'élément de renforcement est soudée contre la paroi extérieure du réservoir (4) de manière à réaliser une étanchéité aux gaz et aux liquides.

5. Réservoir de carburant selon l'une des revendications 1 à 4,
**caractérisé**
**en ce qu'**au moins une extrémité de l'élément de renforcement est serrée contre la paroi de réservoir (4), des moyens d'étanchéité (8) étant préférentiellement disposés entre la paroi de réservoir (4) et l'élément de renforcement, de manière à rendre étanche aux gaz et aux liquides le raccord entre l'élément de renforcement et la paroi extérieure du réservoir (4).

6. Réservoir de carburant selon l'une des revendications 1 à 5,
**caractérisé**
**en ce qu'**au moins une extrémité de l'élément de renforcement est raccordée à la paroi extérieure du réservoir (4) par une connexion à enclenchement rotatif, ladite connexion à enclenchement rotatif comprenant préférentiellement des moyens d'étanchéité (8), de manière à rendre étanche aux gaz et aux liquides le raccord entre l'élément de renforcement et la paroi extérieure du réservoir (4).

7. Réservoir de carburant selon l'une des revendications 1 à 6,
**caractérisé**
**en ce que** l'élément de renforcement est serré sous précontrainte contre la paroi extérieure du réservoir (4), de telle manière que ladite précontrainte s'oppose à une déformation du réservoir de carburant (1) par une augmentation de pression à l'intérieur du réservoir de carburant (1).

8. Réservoir de carburant selon l'une des revendications 1 à 7
**caractérisé**
**en ce que** l'élément de renforcement est réalisé comme unité de refoulement, ladite unité de refoulement étant disposée entre des ouvertures (5, 6) alignées opposées dans la paroi de réservoir (4).

9. Réservoir de carburant selon l'une des revendications 1 à 8,
**caractérisé**
**en ce que** ledit réservoir de carburant (1) est réalisé comme réservoir formé par extrusion-soufflage.
